(19) Europäisches Patentamt
European Patent Office
Office européen des brevets

(11) EP 1 548 068 B1

(12) **EUROPEAN PATENT SPECIFICATION**

(45) Date of publication and mention of the grant of the patent:
**31.12.2014 Bulletin 2015/01**

(21) Application number: **03795224.9**

(22) Date of filing: **14.08.2003**

(51) Int Cl.:
***C08K 3/26*** *(2006.01)* ***C08F 297/04*** *(2006.01)*

(86) International application number:
**PCT/JP2003/010366**

(87) International publication number:
**WO 2004/024825 (25.03.2004 Gazette 2004/13)**

(54) **POLYMER COMPOSITION CONTAINING DOUBLE SALT WHOSE METAL COMPONENTS ARE MAGNESIUM AND ALUMINUM**

POLYMERZUSAMMENSETZUNG, ENTHALTEND EIN DOPPELSALZ MIT MAGNESIUM UND ALUMINIUM ALS METALLKOMPONENTEN

COMPOSITION POLYMERIQUE CONTENANT UN SEL DOUBLE DONT LES COMPOSANTS METALLIQUES SONT LE MAGNESIUM ET L'ALUMINIUM

(84) Designated Contracting States:
**BE DE FR GB NL**

(30) Priority: **13.09.2002 JP 2002267513**

(43) Date of publication of application:
**29.06.2005 Bulletin 2005/26**

(73) Proprietor: **Kaneka Corporation**
**Osaka (JP)**

(72) Inventors:
- **FUKUDA, Ryuji**
**Settsu-shi, Osaka 566-0072 (JP)**
- **OSHIMA, Koji**
**Kakogawa-shi, Hyogo 675-0022 (JP)**
- **AOYAMA, Taizo**
**Takasago-shi, Hyogo 676-0025 (JP)**

(74) Representative: **Vossius & Partner**
**Siebertstrasse 4**
**81675 München (DE)**

(56) References cited:
**EP-A1- 0 905 156**
**JP-A- 4 088 041**
**JP-A- 7 118 474**
**JP-A- 2000 157 627**
**JP-A- 2001 059 047**
**JP-A- 2002 060 640**
**JP-A- 2003 201 373**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 548 068 B1

## Description

This application claims priority from Japanese patent application No.2002-267513, which is incorporated by reference herein in its entirety.

The present invention relates to a polymer composition in which a chlorine component liberated from a polymer, which is produced by polymerizing cationically polymerizable monomers with an initiator in the presence of a Lewis acid catalyst, is trapped with a certain double salt containing magnesium and aluminum as metal atoms.

In cationic polymerization, compounds including tertiary carbon atoms bonded to halogen atoms in their molecules and metal chlorides including metal atoms and chlorine atoms are often used as initiators and catalysts, respectively. However, in the production process using such compounds, chlorine atoms originating from the initiator or the catalyst inevitably bond to ends of polymer molecules produced. Consequently, the resultant polymer molecules contain chlorine atoms.

When the polymer is produced, in order to remove the polymerization solvent contained in the polymer, post-processing equipment, such as an evaporator, is usually required. In the post-processing step, since the polymer is heated, the chlorine atoms bonded to the ends of the polymer molecules are easily liberated. The liberated chlorine species cause serious problems, such as corrosion of the equipment. When the polymer is processed with an extruder or the like, chlorine atoms are also liberated, which may accelerate corrosion of the mold, etc.

For example, butyl rubber or the like is polymerized by cationic copolymerization of isobutylene and isoprene using a Friedel-Crafts catalyst and a very small amount of water as a catalyst, and the polymer contains chlorine atoms originating from the catalyst.

With respect to isobutylene block copolymers, for example, a process is disclosed in U.S. Patent No. RE34,640, in which, by an inifer method, in the presence of a Lewis acid catalyst, 1,4-bis($\alpha$-chloroisopropyl)benzene or the like having chlorine atoms bonded to tertiary carbon is used as a polymerization initiator, and in the presence of an electron donor which is a nucleophilic agent, isobutylene monomers and styrene monomers are added one after another to form a styrene-isobutylene block copolymer. A process is also disclosed in Japanese Examined Patent Application Publication No. 7-059601, in which a styrene-isobutylene-styrene block copolymer is prepared by the same method using an amine compound as an electron donor.

As described above, in the preparation of isobutylene block copolymers, when an initiator having chlorine atoms is used, the resultant isobutylene block copolymer also contains chlorine atoms, which originate from the polymerization initiator or the Lewis acid catalyst, at the ends of the polymer molecules. When the isobutylene block copolymer having chlorine atoms is heated at or above the melting temperature of the polymer during processing, the chlorine component is liberated, resulting in corrosion of dryers and processing apparatuses, etc.

In order to overcome the problems described above, Japanese Unexamined Patent Application Publication No. 2002-179932 discloses a composition containing a hydrochloric acid-trapping agent. However, disclosed examples of hydrochloric acid-trapping agents include only tin-based agents such as dioctyltin mercaptide and diocyltin maleate, epoxidized soybean oil, and metal soaps. When the tin-based trapping agent, such as dioctyltin mercaptide, is used, odor remains in the composition due to the effect of a product produced when hydrochloric acid is trapped. With respect to the other trapping agents, due to low capability of trapping hydrochloric acid, a large amount of trapping agent must be added in order to be effective. Some of these hydrochloric acid-trapping agents have safety problems, particularly in use for food packages and in medical applications.

EP 0 905 156 A1 discloses a block copolymer having an isobutylene-based polymer block and a vinylic aromatic hydrocarbon-based polymer block and containing a styrenic unit having a halogenated saturated aliphatic hydrocarbon group on the benzene ring at 0.01 to 2 mol % on a basis of the total structural units; a process for producing the block copolymer; and a resin composition containing the block copolymer.

JP 2000-157627 A describes a medical tool which is composed of a composition containing (a) a block copolymer containing an isobutylene polymer segment and a vinyl aromatic compound polymer segment and (b) a specific thermoplastic resin, wherein the thermoplastic resin (b) is selected from a polyolefine resin and an ethylene-vinyl alcohol copolymer resin.

JP 2003-201373 A relates to a rubber composition which is obtained by a process comprising the step of preparing a mixture by mixing a polymer dispersion comprising a dispersion of a rubbery polymer compound such as an acrylonitrile rubber with an inorganic compound dispersion comprising a dispersion of a laminar inorganic compound such as a swelling mica, and the step of recovering a rubber composition from the mixture by using a cationic substance and a polyvalent metal salt to solidify the rubbery polymer compound and the laminar inorganic compound together.

JP 2002-60640 A discloses a stabilized halogen-containing resin composition containing as effective components (a) 0.1-10 pbw. highly dispersible calcium hydroxide minute particle, whose surface is treated with a 0.1-10 wt.% anion surfactant and which has an average secondary particle diameter at 50% accumulation of not larger than 2 $\mu$m, and a BET specific surface area of 7-20 $m^2/g$, (b) 0.001-1 pbw. perchlorate, (c) 0.01-2 pbw. zinc compound, and (d) 0-2 pbw. partial ester of a polyhydric alcohol or a polyhydric alcohol, based on 100 pbw. halogen-containing resin.

JP 2001-59047 A describes a vinyl chloride resin for wire-coating use which is produced by compounding 100 pbw. of a vinyl chloride resin with (A) 0.05-10 pbw. of a hydrotalcite compound expressed by general formula $Mg_{X1}Zn_{X2}Al_2(OH)_{2X1+2X2}+_4CO_3 \cdot m\ H_2O$(X1 and X2 are each a number satisfying the formulas $0 \leq X2/X1 \leq 10$, $2 \leq X1+X2 \leq 20$) and (B) 0.001-2 pbw. of magnesium hydroxide.

JP 7-118474 A relates to a composition which is obtained by mixing (A) 100 pbw. of a chlorine-containing resin (e.g. PVC or polyvinylidene chloride) with (B) 0.001-5 pbw. of a copper acetate (e.g. cuprous chloride or basic copper acetate) and (C) 0.01-10 pbw. of a hydrotalcite compound obtained by combining 0.01-10 pbw. of a copper compound (e.g. copper oxide) with 0.01-10 pbw. of a hydrotalcite compound.

JP 4-88041 A discloses a composition comprising 100 pbw. rigid chlorine-containing resin (e.g. PVC, chlorinated PE or vinyl chloride-ethylene copolymer) which is blended with 0.001-5 pbw. hydrotalcite compound treated with an aqueous solution of an inorganic copper compound (e.g. cuprous chloride) and an aqueous solution of an alkali carbonate (e.g. sodium carbonate).

It is an object of the present invention to provide a polymer composition including a polymer produced by cationic polymerization, in which the composition does not liberate a chlorine component by heating, which prevent processing apparatus, driers, etc. from corroding, and which is odorless and safe.

The present inventors have conducted intensive research to overcome the problems described above. As a result, a safe polymer composition has been produced by adding a hydrotalcite, which is surface treated with an organic compound and has an average particle size of 10μm or less, to a polymer obtainable by polymerizing cationically polymerizable monomers with an initiator in the presence of a Lewis acid catalyst, in which chlorine that is liberated at relatively low temperatures is trapped in the step of evaporating the solvent, and thereby post-treatment equipment, such as an evaporator, is not corroded and odor is low; and in which the chlorine component is not liberated during processing, and thereby processing apparatuses are not corroded.

That is, in accordance with the present invention, a polymer composition includes (A) a polymer containing chlorine atoms, the polymer being obtainable by polymerizing cationically polymerizable monomers with an initiator in the presence of a Lewis acid catalyst, and (B) a hydrotalcite, which is surface treated with an organic compound and has an average particle size of 10μm or less.

In a preferred embodiment of the polymer composition, the polymer is an isobutylene block copolymer including a block which does not contain isobutylene as a principal component and a block which contains isobutylene as a principal component.

The present invention will be described in detail below. In the present invention, a polymer obtainable by polymerizing cationically polymerizable monomers with a Lewis acid catalyst is used.

The cationically polymerizable monomer of the present invention is not particularly limited as long as cationic polymerization is enabled. Examples of cationically polymerizable monomers include aliphatic olefins, aromatic vinyls, dienes, vinyl ethers, silane compounds, vinylcarbazoles, β-pinene, and acenaphthylene. These may be used alone or in combination.

Examples of aliphatic olefins include propylene, isobutylene, 1-butene, 2-methyl-1-butene, 3-methyl-1-butene, pentene, hexene, cyclohexene, 4-methyl-1-pentene, vinylcyclohexene, octene, and norbornene.

Examples of aromatic vinyl monomers include styrene, o-, m-, or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m-, or p-tert-butylstyrene, o-, m-, or p-methoxystyrene, o-, m-, or p-chloromethylstyrene, o-, m-, or p-bromomethylstyrene, silyl-substituted styrene derivatives, vinylnaphthalene derivatives, and indene derivatives.

Examples of dienemonomers include butadiene, isoprene, cyclopentadiene, cyclohexadiene, dicyclopentadiene, divinylbenzene, and ethylidenenorbornene.

Examples of vinyl ether monomers include methyl vinyl ether, ethyl vinyl ether, (n-, iso)propyl vinyl ether, (n-, sec-, tert-, iso)butyl vinyl ether, methylpropenyl ether, and ethylpropenyl ether.

Examples of silane compounds include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, and γ-methacryloyloxypropylmethyldimethoxysilane.

One type of these monomers may be polymerized or two or more types of these monomers may be copolymerized. Examples of copolymers include random, block, graft copolymers. Among them, isobutylene is known to be a monomer which is not polymerized by radical polymerization or anionic polymerization, and which can be polymerized only by cationic polymerization. By using isobutylene, industrially useful polymers can be produced. For example, a

homopolymer of isobutylene is used as a food additive, a random copolymer with isoprene is used as butyl rubber, and a random copolymer with α-methylstyrene is also used as improved butyl rubber. Recently, an isobutylene block copolymer including a block which contains isobutylene as a principal component and a block which does not contain isobutylene as a principal component has been developed, and industrial applications thereof are expected. For the reasons described above, among the cationically polymerizable monomers, a homopolymer, random copolymers, or block copolymers including isobutylene as a component is preferably used. Additionally, cationic polymerization of isobutylene monomer can be easily controlled, and a polymer with a narrow molecular-weight distribution can be produced.

In the present invention, an isobutylene block copolymer including a block which does not contain isobutylene as a principal component and a block which contains isobutylene as a principal component is preferably used. The structure of the isobutylene block copolymer is not particularly limited. Examples thereof include a diblock copolymer composed of a block which does not contain isobutylene as a principal component and a block which contains isobutylene as a principal component; a triblock copolymer composed of a block which does not contain isobutylene as a principal component, a block which contains isobutylene as a principal component, and a block which does not contain isobutylene as a principal component; a triblock copolymer composed of a block which contains isobutylene as a principal component, a block which does not contain isobutylene as a principal component, and a block which contains isobutylene as a principal component; a star block copolymer including at least three arms bonded to a core composed of a multifunctional component, each arm being composed of a block which contains isobutylene as a principal component and a block which does not contain isobutylene as a principal component; and mixtures of these copolymers. Among them, in view of the physical properties of the copolymer, more preferred are the triblock copolymer composed of a block which does not contain isobutylene as the principal component, a block which contains isobutylene as the principal component, and a block which does not contain isobutylene as the principal component, and the diblock copolymer composed of a block which does not contain isobutylene as the principal component and a block which contains isobutylene as the principal component.

In the present invention, the block containing isobutylene as the principal component preferably contains 60% by weight or more, and more preferably 80% by weight or more, of isobutylene, because of excellent dynamic properties as an elastomer.

In the present invention, the block which contains isobutylene as the principal component may or may not contain a monomer other than isobutylene. As the monomer other than isobutylene, any cationically polymerizable monomer may be used. Examples thereof include aliphatic olefins, aromatic vinyls, dienes, vinyl ethers, silane compounds, vinylcarbazoles, β-pinene, and acenaphthylene.

In the present invention, the block which does not contain isobutylene as the principal component is defined by a block with an isobutylene content of 30% by weight or less. The isobutylene polymer of the present invention has elastomeric properties (rubber elasticity). In this case, desirably, the block which does not contain isobutylene as the principal component, which corresponds to a hard segment of the elastomer, preferably does not contain isobutylene in view of the dynamic properties of the copolymer. The isobutylene content in the block which does not contain isobutylene as the principal component is preferably 10% by weight or less, and more preferably 3% by weight or less.

As the monomer constituting the block which does not contain isobutylene as the principal component, any cationically polymerizable monomer may be used. Examples thereof include aliphatic olefins, aromatic vinyls, dienes, vinyl ethers, silane compounds, vinylcarbazoles, β-pinene, and acenaphthylene. These may be used alone or in combination.

As the isobutylene block copolymer of the present invention, most preferred are a triblock copolymer composed of an aromatic vinyl compound block, an isobutylene block, and an aromatic vinyl compound block; a diblock copolymer composed of an aromatic vinyl compound block and a block which contains isobutylene as a principal component; and a mixture of these copolymers. As the aromatic vinyl compound block, particularly preferred is a block composed of at least one monomer selected from the group consisting of styrene, α-methylstyrene, p-methylstyrene, vinylnaphthalene derivatives, and indene derivatives. These monomers are easily available and are preferred in view of cost.

Examples of polymerization initiators which may be used in the present invention include a compound represented by general formula (I):

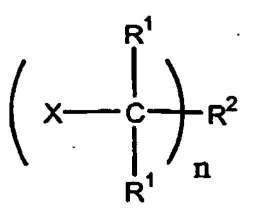

(I)

[wherein a plurality of $R^1$s, which may be the same or different, each represent a hydrogen atom or a monovalent

hydrocarbon group of 1 to 6 carbon atoms; $R^2$ represents a polyvalent aromatic hydrocarbon group or polyvalent aliphatic hydrocarbon group; X represents a halogen atom, an alkoxyl group of 1 to 6 carbon atoms, or an acyloxyl group; and n is an integer of 1 to 6].

The alkoxyl group of 1 to 6 carbon atoms, i.e., X, in the polymerization initiator represented by general formula (I) is not particularly limited. Examples thereof include methoxy, ethoxy, n- or isopropoxy groups.

Specific examples of the compound represented by general formula (I) include 1-chloro-1-methylethylbenzene [$C_6H_5C(CH_3)_2Cl$] , 1, 4-bis (1-chloro-1-methylethyl)benzene [1,4-$Cl(CH_3)_2CC_6H_4C(CH_3)_2Cl$], 1,3-bis(1-chloro-1-methylethyl) benzene [1,3-$Cl(CH_3)_2CC_6H_4C(CH_3)_2Cl$], 1,3,5-tris(1-chloro-1-methylethyl)benzene [1,3,5-$((ClC(CH_3)_2)_3C_6H_3$], and 1,3-bis(1-chloro-1-methylethyl)-5-(tert-butyl)benzene [1,3-$((C(CH_3)_2Cl)_2$-5-$(C(CH_3)_3)C_6H_3$]. Bis(1-chloro-1-methylethyl)benzene is also referred to as bis($\alpha$-chloroisopropyl)benzene, bis(2-chloro-2-propyl)benzene, or dicumyl chloride. Among them, 1,4-bis(1-chloro-1-methylethyl)benzene and 1-chloro-1-methylethylbenzene are particularly preferred in view of reactivity and availability.

In the present invention, during polymerization, a Lewis acid catalyst is present. Any Lewis acid which can be commonly used for cationic polymerization may be acceptable. Preferred examples include metal halides, such as $TiCl_4$, $TiBr_4$, $BCl_3$, $BF_3$, $BF_3 \cdot OEt_2$, $SnCl_4$, $SbCl_5$, $SbF_5$, $WCl_6$, $TaCl_5$, $VCl_5$, $FeCl_3$, $ZnBr_2$, $AlCl_3$, and $AlBr_3$: and organic metal halides, such as $Et_2AlCl$ and $EtAlCl_2$. Above all, more preferred are $TiCl_4$, $BCl_3$ and $SnCl_4$ in view of catalytic capability and industrial availability.

The amount of the Lewis acid added in the present invention is not particularly limited as long as it is sufficient for generating cations at the ends of the polymer molecule. The required amount of Lewis acid is at least 0.5 equivalents of the ends of the polymer molecule for satisfactory cationic polymerization. If the amount of Lewis acid is less than 0.5 equivalents, the effect of the catalyst is not shown satisfactorily. If the amount of the Lewis acid added exceeds 50 equivalents of the ends of the polymer, the effect of the catalyst is not substantially improved. Therefore, in the present invention, the Lewis acid is usually used in an amount of 0.5 to 50 equivalents, and preferably, 1.5 to 35 equivalents the ends of the polymer molecule. The Lewis acid which is present in the polymerization system during the synthesis of the block copolymer by consecutive addition of isobutylene and the other monomers may be used as it is as a catalyst for the reaction, or a new Leis acid may be added when the aromatic compound is incorporated.

In the present invention, a double salt containing magnesium and aluminum as metal atoms is used, wherein the double salt is a hydrotalcite, which is surface treated with an organic compound and has an average particle size of 10 $\mu$m or less. The double salt traps the chlorine component liberated from the cationic polymer.

A double salt is a higher-order compound containing at least two types of salts.

In the present invention, the double salt may also contain another metal atom, in addition to magnesium and aluminum. The metal, other than magnesium and aluminum, which can be incorporated is not particularly limited. Examples thereof include calcium, zinc, potassium, and sodium.

Examples of hydrotalcites include a hydrotalcite which is a natural mineral, and synthetic hydrotalcites (U.S. Patent No.3539306, U.S. Patent No.3650704). For example, a hydrotalcite has the general structure below.

$$Mg_{1-x}Al_x(OH)_2(CO_3)_{x/2} \cdot mH_2O \ (0 < X \leq 0.5)$$

The hydrotalcites are generally nonhazardous and nontoxic.

The hydrotalcites are powdery. In order to impart dispersibility into the polymer containing chlorine atoms polymerized by cationic polymerization or the polymerization solution, the hydrotalcites are surface-treated with an organic compound. As the surface treatment method, for example, surface coating may be employed. The hydrotalcites are preferably coated with alkyl groups of 10 or more carbon atoms. As the coating method, for example, coating with a higher fatty acid of 10 or more carbon atoms may be employed.

In view of dispersibility into the polymer, the appearance of the composition, and the physical properties, the average particle size of the hydrotalcite is 10 $\mu$m or less, preferably 5 $\mu$m or less, and more preferably 1.5 $\mu$m or less.

The amount of the hydrotalcite to be added is not particularly limited. For example, the hydrotalcite is added in an amount of 0.01 to 10 parts by weight, preferably 0.1 to 5 parts by weight, and more preferably 0.1 to 3 parts by weight, based on 100 parts by weight of the polymer.

If the amount is less than 0.01 parts by weight, the effect of trapping liberated chlorine originating from the initiator or the Lewis acid becomes insufficient. If the amount exceeds 10 parts by weight, mechanical and physical properties of the cationic polymer composition tend to be degraded.

The hydrotalcite may be directly added into the polymerization solution obtained by cationic polymerization. The polymer isolated from the polymerization solution may be dissolved in toluene, a halogenated solvent, or the like, and the hydrotalcite may be added therein. Alternatively, the hydrotalcite may be melt-kneaded into the polymer produced by cationic polymerization. In order to prevent evaporators, molding apparatuses, etc. from corroding, preferably, the hydrotalcite is directly added into the polymerization solution obtained by cationic polymerization.

In order to produce the polymer used in the polymer composition of the present invention, monomers are fed

with a Lewis acid catalyst in the presence of an initiator. In the random copolymer, a plurality of monomers may be fed with an initiator and a Lewis acid. In the block copolymer, monomers may be consecutively added, in the presence of an initiator and a Lewis acid. For example, in the case of the isobutylene block copolymer, either the polymerization step of the monomer which contains isobutylene as the principal component or the polymerization step of the monomer which does not contain isobutylene as the principal component is performed first by consecutive addition of the monomers, and the order of addition may be determined arbitrarily depending on the structure of the desired block copolymer. For example, in the case of the diblock copolymer, after a monomer mixture which contains isobutylene as the principal component is polymerized, a monomer mixture which does not contain isobutylene as the principal component may be added for polymerization, or the order of addition may be reversed. In the case of the triblock copolymer, for example, after a monomer mixture which contains isobutylene as the principal component is polymerized with a bifunctional initiator, a monomer mixture which does not contain isobutylene as the principal component may be added for polymerization. Alternatively, after a monomer mixture which does not contain isobutylene as the principal component is polymerized with a monofunctional initiator, a monomer which contains isobutylene as the principal component is added for polymerization, and finally, a coupling agent for bonding the two polymer molecules to each other is added thereto.

In the cationic polymerization of the present invention, an electron donor component may be used as necessary. In the present invention, any known electron donor component may be widely used as long as its donor number is 15 to 60. Examples of preferred electron donor components include pyridines, amines, amides, sulfoxides, and metal compounds containing oxygen atoms bonded to metal atoms. Specific examples of electron donor compounds with a donor number of 15 to 60, the donor number being defined as a parameter of strength as an electron donor, which may be used in the present invention, include 2,6-di-tert-butylpyridine, 2-tert-butylpyridine, 2,4,6-trimethylpyridine, 2,6-dimethylpyridine, 2-methylpyridine, pyridine, diethylamine, trimethylamine, triethylamine, tributylamine, N,N-dimethylaniline, N,N-dimethylformamide, N,N-dimethylacetamide, N,N-diethylacetamide, dimethylsulfoxide, diethyl ether, methyl acetate, ethyl acetate, trimethyl phosphate, hexamethylphosphoric triamide, titanium alkoxides such as titanium trimethoxide, titanium tetramethoxide, titanium tetraisopropoxide, and titanium tetrabutoxide, and aluminum alkoxides such as aluminum triethoxide and aluminum tributoxide. Preferred examples are 2,6-di-tert-butylpyridine, 2,6-dimethylpyridine, 2-methylpyridine, pyridine, diethylamine, trimethylamine, triethylamine, N,N-dimethylformamide, N,N-dimethylacetamide, dimethylsulfoxide, titanium tetraisopropoxide, and titanium tetrabutoxide. [The donor numbers of various materials are shown in "Donors and Acceptors", Goodman (translated by Otaki/Okada), Gakkai Shuppan Center (1983).]

Among them, particularly preferred are 2-methylpyridine, N,N-dimethylacetamide, dimethylsulfoxide, and titanium tetraisopropoxide which exhibit a remarkable addition effect. In the present invention, the electron donor component is used preferably in an amount of 0.01 to 10 molar times and more preferably in an amount of 0.2 to 6 molar times the compound represented by general formula (I).

The polymer of the present invention may be produced in a solvent as necessary. In the present invention, any known solvent may be used as long as it does not substantially inhibit cationic polymerization. Specific examples of solvents include halogenated hydrocarbons, such as methyl chloride, dichloromethane, n-propyl chloride, n-butyl chloride, and chlorobenzene; alkylbenzenes, such as benzene, toluene, xylene, ethylbenzene, propylbenzene, and butylbenzene; linear aliphatic hydrocarbons, such as ethane, propane, butane, pentane, hexane, heptane, octane, nonane, and decane; branched aliphatic hydrocarbons, such as 2-methylpropane, 2-methylbutane, 2,3,3-trimethylpentane, and 2,2,5-trimethylhexane; alicyclic hydrocarbons, such as cyclohexane, methylcyclohexane, and ethylcyclohexane; and paraffin oil produced by hydrogenation refining of petroleum fraction.

These solvents may be used alone or in combination in consideration of polymerization characteristics of the monomer constituting the polymer, the solubility of the resultant polymer, etc. The amount of solvent used is usually determined so that the concentration of the polymer is 1 to 50% by weight, and preferably 5 to 40% by weight, in view of the viscosity of the resultant polymer solution and ease of cooling.

In conducting the polymerization reaction, the respective components are admixed under cooling, for example at a temperature not below -100°C but below 0°C. To strike a balance between the cost of energy and stability of polymerization, the preferred temperature range is -80°C to -30°C.

The amount of each component may be properly designed depending on the desired characteristics of the polymer to be produced.

Examples

While the present invention will be described in detail based on the examples below, it is to be understood that the invention is not limited thereto, and various modifications can be made within the scope not deviating from the object of the invention. Various measurement methods and evaluation methods will be described first.

(Measurement of free hydrogen chloride gas)

A composition was melt-kneaded at 200°C for 5 minutes with Labo Plastomill (manufactured by Toyoseiki) with a sealed chamber, and then gas in the chamber was collected. The hydrogen chloride gas concentration (a) in the gas collected was measured with a chlorine gas detection tube (GASTEC No. 14M or L manufactured by GASTEC Corporation). Using the hydrogen chloride gas concentration (b) of a polymer after melt-kneading in the same condition in which a hydrotalcite was not added (Comparative Example 1), the hydrogen chloride liberation ratio was calculated in accordance with the expression below.

$$\text{hydrogen chloride liberation ratio} = a/b \times 100$$

(Corrosion test)

In order to perform a corrosion test, 2 g of composition was placed in a test tube, and an iron nail surface-treated with toluene and 0.1 N hydrochloric acid was suspended in the test tube so as not to be in contact with the composition. The test tube was plugged with absorbent cotton, and after heating at 220°C for 30 minutes, the iron nail was recovered and cooled to room temperature. The surface corrosion of the iron nail was compared with that of a blank which was tested without the composition. The sample in which no change in appearance was observed with reference to the blank was evaluated as satisfactory (O), and the sample in which a change in appearance was observed and rust was found was evaluated as unsatisfactory (x).

(Odor test)

10 g of composition was placed in a sealable bottle and was left to stay for a day. The odor in the bottle was evaluated by an organoleptic examination. The odorless sample was evaluated as satisfactory (○), and the malodorous sample was evaluated as unsatisfactory (×).

(EXAMPLE 1)

Into a 200 L reactor equipped with an agitator and a jacket was added 65 kg of 1-chlorobutane (dried with molecular sieves), 33 kg of n-hexane (dried with molecular sieves), 50.8 g of 1,4-bis(α-chloro-isopropyl)benzene, and 38 g of dimethylacetamide. The reactor was cooled to -70°C and then 14.8 kg of isobutylene was added thereto. Titanium tetrachloride (1.5 kg) was further added thereto to start polymerization. The reaction was carried out for 90 minutes while the solution was stirred at -70°C. Next, styrene (7.2 kg) was added to the reaction solution, and the reaction was further carried out for 60 minutes. A polymer solution was thereby produced. The resultant polymer solution was added into deionized water at 60°C to terminate the reaction. After the polymer solution was washed with water at 60°C for 2 hours, water was discharged, and the polymer solution was further washed with water twice at 60°C. Water was discharged, and 110 g of a hydrotalcite (DHT-4A manufactured by Kyowa Chemical) was added to the polymer solution. The solvent was removed by distillation with a evaporator, and extrusion was performed with a twin-screw extruder to produce a styrene-isobutylene-styrene block copolymer composition. Using the resultant composition, the reduction ratio was evaluated and the corrosion test and odor test were performed. The results thereof are shown in Table 1.

(COMPARATIVE EXAMPLE 1)

A styrene-isobutylene-styrene block copolymer was produced as in Example 1, except that the hydrotalcite was not added to the polymer solution.

(EXAMPLE 2)

Into a 200 L reactor equipped with an agitator and a jacket was added 65 kg of 1-chlorobutane (dried with molecular sieves), 33 kg of n-hexane (dried with molecular sieves), 50.8 g of 1,4-bis(α-chloro-isopropyl)benzene, and 38 g of dimethylacetamide. The reactor was cooled to -70°C and then 14.8 kg of isobutylene was added thereto. Titanium tetrachloride (1.5 kg) was further added thereto to start polymerization. The reaction was carried out for 90 minutes while the solution was stirred at -70°C. Next, styrene (7.2 kg) was added to the reaction solution, and the reaction was further carried out for 60 minutes. A polymer solution was thereby produced. The resultant polymer solution was added into deionized water at 60°C to terminate the reaction. After the polymer solution was washed with water at 60°C for 2 hours,

water was discharged, and the polymer solution was further washed with water twice at 60°C. A hydrotalcite (DHT-4A manufactured by Kyowa Chemical), in an amount of 0.5 parts by weight based on 100 parts by weight of the polymer solid content, was added to the resultant styrene-isobutylene-styrene block copolymer solution. The solvent was removed by distillation under reduced pressure to produce a polymer composition. Using the resultant polymer composition, the same evaluations as those in Example 1 were performed. The results thereof are shown in Table 1.

(EXAMPLE 3)

A composition was produced as in Example 2, except that the amount of the hydrotalcite added was 0.25 parts by weight based on 100 parts by weight of the solid content. The resultant composition was evaluated as in Example 1.
The results thereof are shown in Table 1.

(EXAMPLE 4)

A composition was produced as in Example 2, except that ZHT-4A manufactured by Kyowa Chemical was used as the hydrotalcite. The resultant composition was evaluated as in Example 1. The results thereof are shown in Table 1.

(EXAMPLE 5)

Into a 200 L reactor equipped with an agitator and a jacket was added 70 kg of 1-chlorobutane (dried with molecular sieves), 37 kg of n-hexane (dried with molecular sieves), 104.5 g of 1,4-bis($\alpha$-chloro-isopropyl)benzene, and 72.7 g of dimethylacetamide. The reactor was cooled to -70°C and then 19 kg of isobutylene was added thereto. Titanium tetrachloride (1.7 kg) was further added thereto to start polymerization. The reaction was carried out for 90 minutes while the solution was stirred at -70°C. Next, styrene (8.1 kg) was added to the reaction solution, and the reaction was further carried out for 60 minutes. A polymer solution was thereby produced. The resultant polymer solution was added into deionized water at 60°C to terminate the reaction. After the polymer solution was washed with water at 60°C for 2 hours, water was discharged, and the polymer solution was further washed with water twice at 60°C. Water was discharged, and 135 g of a hydrotalcite (DHT-4A manufactured by Kyowa Chemical) was added to the polymer solution. The solvent was removed by distillation with a evaporator, and extrusion was performed with a twin-screw extruder to produce a styrene-isobutylene-styrene block copolymer composition. The resultant composition was evaluated as in Example 1. The results thereof are shown in Table 1.

(COMPARATIVE EXAMPLE 2)

A composition was produced as in Example 1, except that a dioctyltin mercaptide-based compound (465E manufactured by Asahi Denka) was used instead of the hydrotalcite. The resultant composition was evaluated as in Example 1. The results thereof are shown in Table 1.

(COMPARATIVE EXAMPLE 3)

A composition was produced as in Example 1, except that magnesium stearate was used instead of the hydrotalcite. The resultant composition was evaluated as in Example 1. The results thereof are shown in Table 1.

TABLE 1

| | Hydrogen chloride liberation ratio | Corrosion test | Odor test |
|---|---|---|---|
| Example 1 | 0.2 | ○ | ○ |
| Example 2 | 2 | ○ | ○ |
| Example 3 | 5 | ○ | ○ |
| Example 4 | 5 | ○ | ○ |
| Example 5 | 1 | ○ | ○ |
| Comparative Example 1 | 100 | × | ○ |
| Comparative Example 2 | 0.2 | ○ | × |

(continued)

| | Hydrogen chloride liberation ratio | Corrosion test | Odor test |
|---|---|---|---|
| Comparative Example 3 | 30 | × | ○ |

As is evident from the above table, when the hydrotalcite of the present invention was not fed, free hydrogen chloride gas was generated. As is also evident from Table 1, in Examples 1 to 5, generation of free hydrogen chloride gas was inhibited, no odor was sensed, and no metal corrosion was observed.

Industrial Applicability

In accordance with the present invention, by adding a hydrotalcite, which is surface treated with an organic compound and has an average particle size of 10μm or less, to a polymer obtainable by cationic polymerization, free chlorine is inhibited, and thereby, an odorless, safe polymer composition can be obtained, which prevent evaporators, and dryers and molding apparatus from corroding during processing.
Isobutylene copolymer compositions produced in accordance with the present invention can be used in various applications as in the conventional isobutylene block copolymers. For example, the compositions may be used for elastomer materials, resins, rubber, modifiers for asphalt, vibration dampers, base polymers for pressure sensitive adhesives, and components of resin modifiers.

## Claims

**1.** A polymer composition comprising:

(A) a polymer containing chlorine atoms, the polymer being obtainable by polymerizing cationically polymerizable monomers with an initiator in the presence of a Lewis acid catalyst; and
(B) a hydrotalcite, which is surface-treated with an organic compound and has an average particle size of 10 μm or less.

**2.** The polymer composition according to Claim 1, wherein the polymer is an isobutylene block copolymer including a block which does not contain isobutylene as a principal component and a block which contains isobutylene as a principal component.

## Patentansprüche

**1.** Eine Polymerzusammensetzung, umfassend:

(A) ein Polymer enthaltend Chloratome, wobei das Polymer durch Polymerisieren von kationisch polymerisierbaren Monomeren mit einem Initiator in Gegenwart eines LewisSäure-Katalysators erhältlich ist; und
(B) ein Hydrotalcit, dessen Oberfläche mit einer organischen Verbindung behandelt ist und das eine mittlere Teilchengröße von 10 μm oder weniger aufweist.

**2.** Die Polymerzusammensetzung gemäß Anspruch 1, wobei das Polymer ein Isobutylen-Blockcopolymer ist, das einen Block, der Isobutylen nicht als einen Hauptbestandteil enthält, und einen Block, der Isobutylen als einen Hauptbestandteil enthält, enthält.

## Revendications

**1.** Composition polymère comprenant :

(A) un polymère contenant des atomes de chlore, le polymère pouvant être obtenu par polymérisation de monomères polymérisables par voie cationique avec un amorceur en présence d’un catalyseur de type acide de Lewis ; et
(B) un hydrotalcite, qui est traité en surface avec un composé organique et a une taille de particule moyenne

de 10 μm ou moins.

2. Composition polymère selon la revendication 1, dans laquelle le polymère est un copolymère séquencé d'isobutylène comprenant une séquence qui ne contient pas d'isobutylène à titre de composant principal et une séquence qui contient de l'isobutylène à titre de composant principal.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002267513 A
- US RE34640 E
- JP 7059601 A
- JP 2002179932 A
- EP 0905156 A1
- JP 2000157627 A
- JP 2003201373 A
- JP 2002060640 A
- JP 2001059047 A
- JP 7118474 A
- JP 4088041 A
- US 3539306 A
- US 3650704 A


### Non-patent literature cited in the description


- Donors and Acceptors. **GOODMAN.** The donor numbers of various materials. Gakkai Shuppan Center, 1983